# EUROPEAN PATENT SPECIFICATION

(11) **EP 2 378 534 B1**
(45) Date of publication and mention of the grant of the patent: **16.07.2014**
(21) Application number: 11162432.6
(22) Date of filing: 14.04.2011
(51) Int. Cl.: H01H 27/00

(54) **Wireless and battery-less command device, to command the opening and closing of an electric circuit supplying a room**
Drahtlose und batterielose Steuervorrichtung zur Steuerung des Öffnens und Schließens eines Stromkreises, der einen Raum mit Strom versorgt
Dispositif de commande sans fil et sans batterie pour commander l'ouverture et la fermeture d'une alimentation de circuit électrique à une pièce

(30) Priority: 15.04.2010 IT UD20100079
(43) Date of publication of application: 19.10.2011
(73) Proprietor: Borin, Giovanni, 31020 Mareno di Piave (TV) (IT)
(72) Inventor: Borin, Giovanni, 31020 Mareno di Piave (TV) (IT)
(74) Representative: Petraz, Gilberto Luigi

(56) References cited:
- DE-A1-102005 062 162
- DE-B3-102008 017 463

## Description

### FIELD OF THE INVENTION

The present invention concerns a wireless and battery-less command device, that is, automatic, to command the opening or closing of one or more electric supply circuits for a room, such as for example hotel rooms, ships cabins, apartments or residences in general.

### BACKGROUND OF THE INVENTION

It is known to use a command device to open or close an electric supply circuit, to selectively provide electric supply to a determinate room or portion of a building. In particular, the known command device comprises a box inside which a monostable electric switch is attached, which is directly connected to the electric circuit by means of conductor wires and which commands the supply to it.

In particular, the box comprises an opening through which a card can be inserted; this, in turn, actuates the switch, closing the electric circuit. Only when the card is removed does the switch automatically return to its stable position and open the electric circuit.

The switch drive card is of a known type and, for example, is the same card or pass that commands the opening of an access door to the portion of the building to which electric supply is to be supplied.

The known command device has limits in its application, however, inasmuch as it is necessary to connect the switch directly to the supply circuit by means of conductor wires. The latter, for safety and aesthetic reasons, are normally inserted in appropriate ducts or raceways incorporated inside the walls. However, if the raceways are not already prepared, it is necessary to break the wall in order to install them, with consequent costs and inconveniences.

An electro-mechanical switch of the wireless type is also known, which comprises a transducer able to generate electric energy by means of a manual command, and an electronic circuit electrically connected to the transducer, able to emit a radio signal.

One disadvantage of the known electro-mechanical switch is that, in order to be actuated so as to close or open the electric circuit, it requires a direct drive by an external operator.

One purpose of the present invention is to achieve a wireless and battery-less command device which can be installed in any desired position, even distant from the electric supply circuit to be commanded, and without needing to carry out complex installation operations thereof, in order to connect the circuit electrically, such as breaking the walls and installation of the relative raceways.

Another purpose of the present invention is to achieve a wireless and battery-less command device which allows a user to close an electric supply circuit of a room, by inserting a card or pass in a determinate container, and which causes the electric circuit to open only when the card or pass is removed.

The Applicant has devised, tested and embodied the present invention to overcome the shortcomings of the state of the art and to obtain these and other purposes and advantages.

Document DE 10 2008 017 463 discloses a device according to the preamble of claim 1.

### SUMMARY OF THE INVENTION

The present invention is set forth and characterized in the independent claim, while the dependent claims describe other characteristics of the invention or variants to the main inventive idea.

In accordance with the above purposes, a wireless and battery-less command device to command the opening or closing of an electric circuit comprises mechanical drive means, a transducer associated with the mechanical drive means and able to generate an electric signal every time the mechanical drive means are actuated, and transmission means able to generate a radio signal when the electric signal is generated.

According to a characteristic feature of the present invention, the mechanical drive means, the transducer and the transmission means are disposed in a container provided with an opening through which actuation means are able to be inserted, in order to drive the mechanical drive means. Furthermore, means to receive the radio signal are provided to achieve the opening or closing of the electric circuit.

Advantageously, the actuation means comprise a sufficiently rigid card, substantially rectangular in shape.

In particular, the container comprises a box able to be attached on a wall of the room that contains the electric circuit to be opened or closed, and able to support both the transducer, the transmission means and the mechanical drive means.

The transducer advantageously comprises a coil and a ferromagnetic element able to be moved by the mechanical drive means. During the movement of the ferromagnetic element, the coil generates an electric signal, in a known manner.

Advantageously, the mechanical drive means comprise a lever provided with elastic elements that tend to keep it in a determinate inactive position.

The lever is moved into an operating position by the actuation means when they are inserted into the opening of the container, and thus activates the transducer which in turn generates an electric signal. When the actuation means are removed, the elastic elements automatically return the lever to the inactive condition, thus again activating the transducer, which generates another electric signal.

The transmission means comprise a signal transmitter able to transform each electric signal generated by the transducer into a radio signal and to transmit the radio signal to the reception means, which provide to open or close the electric circuit.

In other forms of embodiment, it is possible to use a transceiver device able to acquire several radio signals sent by different devices according to the present invention, which are located in different areas of a building, for example in several rooms of a hotel, and to send them to a central unit equipped with a suitable operating system able to display whether there are persons present in the rooms.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a wireless and battery-less command device according to the present invention, associated with an electric circuit;
- fig. 2 is an exploded view of a part of the wireless and battery-less command device in fig. 1;
- figs. 3 and 4 are schematic representations, in section, of a detail of fig. 2.

To facilitate comprehension, the same reference numbers have been used, where possible, to identify common elements in the drawings that are substantially identical. It is understood that elements and characteristics of one form of embodiment can conveniently be incorporated into other forms of embodiment without further clarifications.

### DETAILED DESCRIPTION OF A PREFERENTIAL FORM OF EMBODIMENT

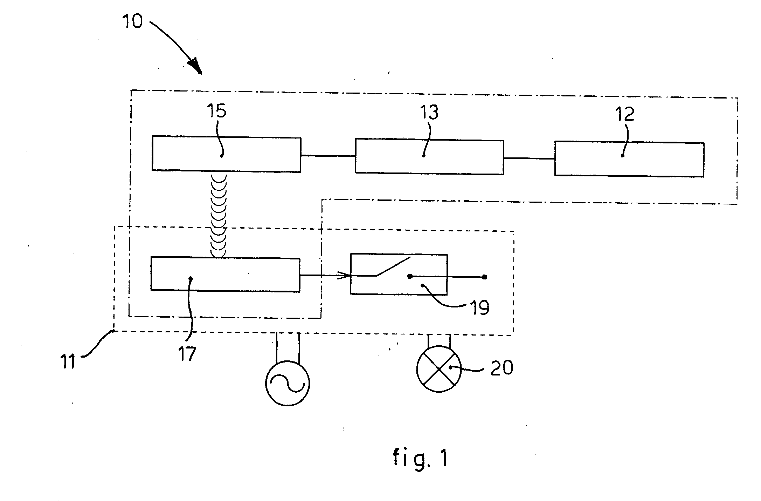

A wireless and battery-less command device 10 (fig. 1) to command the opening or closing of an electric circuit 11 according to the present invention comprises mechanical drive means 12 connected to a transducer 13, which is able to generate an induced current of a predefined intensity, which supplies a signal transmitter 15 and which in turn generates a series of encoded radio impulses.

The latter are able to be received by a receiver 17, located in any position whatsoever of the room where the electric circuit 11 is.

The receiver 17 interacts in a known manner with a switch 19 of the electric circuit 11, to activate or de-activate the electric supply to one or more user devices 20.

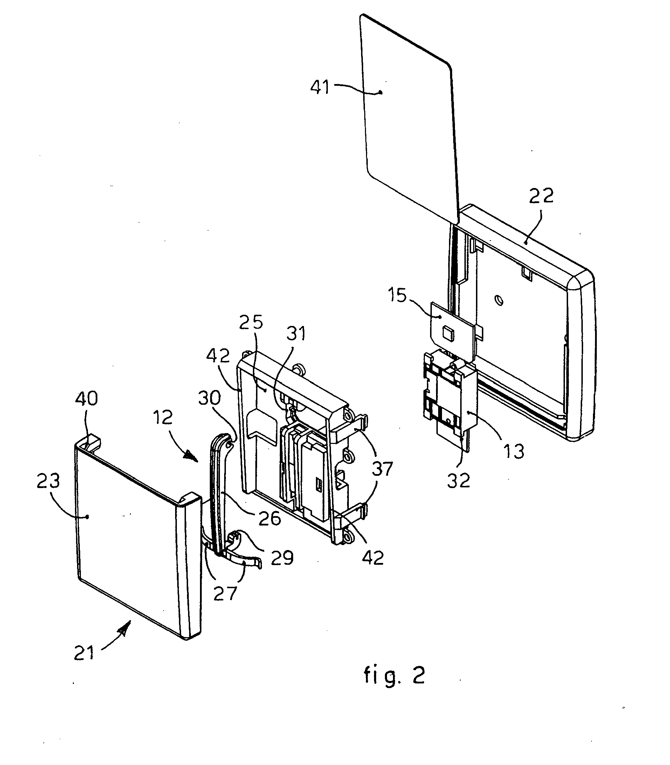

In particular, the mechanical drive means 12, the transducer 13 and the signal transmitter 15 are disposed inside a container 21 (fig. 2). The latter comprises a box 22, able to be attached on any wall of the room, a support 25, disposed inside the box 22 and in which the transducer 13, the signal transmitter 15 and the mechanical drive means 12 are assembled. The container 21 also comprises a closing lid 23 to close the box 22.

The lid 23 is shaped so as to define an upper opening 39, through which it is possible to insert a card 41 or a pass, and is able to be attached with attachment means of a known type, not shown in the drawings.

The card 41 is substantially rectangular in shape, has a determinate thickness (about 1 millimeter), has a certain rigidity and for example is the same card used to command the opening of an access door to a determinate portion of the building.

The mechanical drive means 12 in this case comprise a cross type lever 26, provided laterally with two elastic elements 27, and centrally with an attachment tooth 29.

The lever 26 is pivoted in its upper part in a fulcrum 31 of the support 25.

Thanks to the two elastic elements 27, the lever 26 is normally kept in an inactive position, resting against the lid 23.

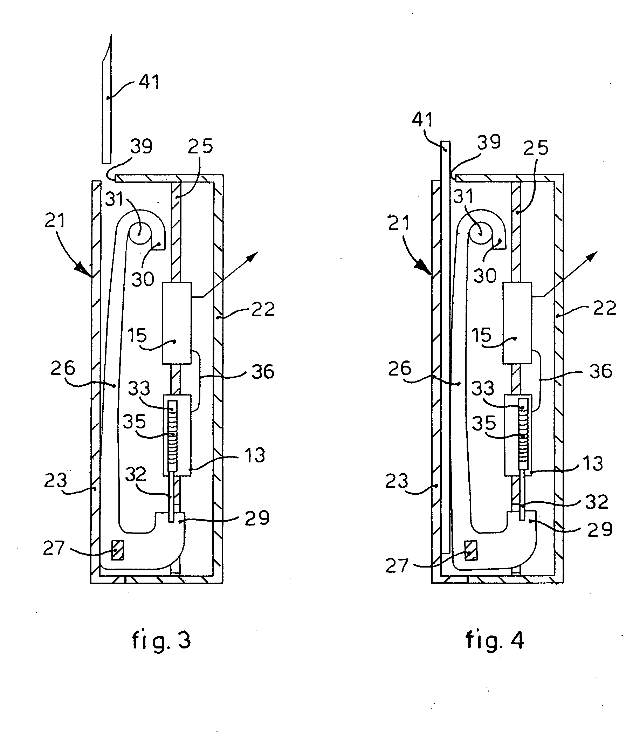

The attachment tooth 29 (fig. 3) is connected to a foil 32 of the transducer 13.

The latter (fig. 3) comprises a coil 35 and a ferromagnetic element 33 disposed inside the coil 35 and directly connected to a foil 32.

The coil 35 is in turn connected to the signal transmitter 15 by means of electric wires 36.

The command device 10 functions as follows.

When the card 41 (fig. 3) is inserted from above into the container 21 through the opening 39, it acts on the lever 26, making it rotate anti-clockwise around the fulcrum 31. The lever 26 (figs. 3 and 4), rotating, moves the foil 32 of the transducer 13 and the ferromagnetic element 33 that is directly connected thereto.

The ferromagnetic element 33, being disposed inside the coil 35, generates in the latter, in a known manner, an induced current that supplies the signal transmitter 15, thus causing the emission of determinate encoded radio impulses.

The latter are received by the receiver 17 which commands the closing of the switch 19 and thus provides electric supply to the group of user devices 20.

When the card 41 is removed and dis-inserted from the container 21, the lever 26 returns to the initial inactive position due to the effect of the elastic elements 27. In the same way, the foil 32 and the ferromagnetic element 33 connected to it are also moved, generating on the coil 35 a new induced current which, like the previous one, is sent to the signal transmitter 15, which processes it and converts it into a new series of encoded radio impulses.

The latter command the switch 19 to open, de-activating the electric supply to the group of user devices 20.

It is clear that modifications and/or additions of parts may be made to the wireless and battery-less command device 10 as described heretofore, without departing from the field and scope of the present invention.

It is also clear that a plurality of command devices 10 according to the present invention can be inserted in a corresponding plurality of rooms in the same building, for example the different rooms of a hotel, thus to form a communication network, in which all the receivers 17 are connected to a central processing unit able to manage everything and to provide useful information on which rooms the card 41 is inserted and which therefore has electric supply.

It is also clear that, although the present invention has been described with reference to some specific examples, a person of skill in the art shall certainly be able to achieve many other equivalent forms of wireless and battery-less command device, having the characteristics as set forth in the claims and hence all coming within the field of protection defined thereby.

## Claims

1. Wireless command device to command the opening or closing of an electric circuit (11), comprising mechanical drive means (12), a transducer (13) associated with said mechanical drive means (12) and able to generate an electric signal every time said mechanical drive means (12) are actuated, **characterized by** transmission means (15) able to generate a radio signal when said electric signal is generated, wherein the electric circuit further comprises reception means (17) to receive said radio signal, whereby said mechanical drive means (12), said transducer (13) and said transmission means (15) are disposed in a container (21) provided with an opening (39) through which actuation means (41) are able to be inserted in order to drive said mechanical drive means (12), and in that said mechanical drive means (12) comprise a lever (26) provided with elastic elements (27) that tend to keep it in a determinate inactive position, wherein said lever (26) is configured, under the action of said actuation means (41), to rotate and move a foil (32) of said transducer (13) and a ferromagnetic element (33) directly connected thereto, located inside a coil (35), so as to generate in the coil (35) an induced current that supplies said transmission means (15), thus causing the emission of encoded radio impulses, that are received by the reception means (17) in order to achieve the opening or closing of said electric circuit (11).

2. Command device as in claim 1, **characterized in that** said container (21) comprises a box (22) able to be attached on a wall and to support both said transducer (13), said transmission means (15) and also said mechanical drive means (12).

3. Command device as in any claim hereinbefore, **characterized in that** said actuation means comprise a sufficiently rigid card (41).

4. Command device as in any claim hereinbefore, characterize in that said transmission means comprise a signal transmitter (15) able to transform said electric signal generated by the transducer (13) into a radio signal and to transmit said radio signal to said reception means (17).

## Patentansprüche

1. Drahtlose Steuerbefehlsvorrichtung, um das Öffnen oder Schließen eines elektrischen Schaltkreises (11) zu befehlen, aufweisend mechanische Antriebsmittel (12), einen Umwandler (13), der mit den mechanischen Antriebsmitteln (12) zusammenhängt und in der Lage ist, jedes Mal ein elektrisches Signal zu generieren, wenn die mechanischen Antriebsmittel (12) betätigt werden, **gekennzeichnet durch** Übertragungsmittel (15), die in der Lage sind, ein Radiosignal zu generieren, wenn das elektrische Signal generiert wird, wobei der elektrische Schaltkreis ferner Empfangsmittel (17) aufweist, um das Radiosignal zu empfangen, wobei die mechanischen Antriebsmittel (12), der Umwandler (13) und die Übertragungsmittel (15) in einem Behälter (21) angeordnet sind, der mit einer Öffnung (39) versehen ist, **durch** welche hindurch Betätigungsmittel (41) in der Lage sind, eingesetzt zu werden, um die mechanischen Antriebsmittel (12) anzutreiben, und wobei die mechanischen Antriebsmittel (12) einen Hebel (26) aufweisen, der mit elastischen Elementen (27) ausgestattet ist, die dazu tendieren, ihn in einer bestimmten inaktiven Position zu halten, wobei der Hebel (26) konfiguriert ist, unter der Betätigung des Betätigungsmittel (41), zu rotieren und eine Folie (32) des Umwandlers (13) und ein damit direkt verbundenes ferromagnetisches Element (33) zu bewegen, welches innerhalb einer Spule (35) angeordnet ist, um in der Spule (35) einen induzierten Strom zu erzeugen, der die Übertragungsmittel (15) versorgt, wodurch die Ausstrahlung von kodierten Radioimpulsen verursacht wird, die von den Empfangsmitteln (17) empfangen werden, um das Öffnen oder Schließen des elektrischen Schaltkreises (11) zu erreichen.

2. Steuerbefehlsvorrichtung gemäß Anspruch 1, **dadurch gekennzeichnet, dass** der Behälter (21) eine Box (22) aufweist, die in der Lage ist, an einer Wand angebracht zu werden und sowohl den Umwandler (13), die Übertragungsmittel (15) als auch die mechanischen Antriebsmittel (12) zu halten.

3. Steuerbefehlsvorrichtung gemäß irgendeinem der vorherigen Ansprüche, **dadurch gekennzeichnet, dass** die Betätigungsmittel eine im Wesentlichen starre Karte (41) aufweisen.

4. Steuerbefehlsvorrichtung gemäß irgendeinem der vorherigen Ansprüche, **dadurch gekennzeichnet, dass** die Übertragungsmittel einen Signaltransmitter (15) aufweisen, der in der Lage ist, das elektrischen Signal, das von dem Umwandler (13) generiert wird, in ein Radiosignal zu transformieren und das Radiosignal zu den Empfangsmitteln (17) zu übertragen.

## Revendications

1. Dispositif de commande sans fil pour commander l'ouverture ou la fermeture d'un circuit électrique (11), comprenant des moyens d'entraînement mécaniques (12), un transducteur (13) associé auxdits moyens d'entraînement mécaniques (12) et capable de générer un signal électrique à chaque fois que lesdits moyens d'entraînement mécaniques (12) sont actionnés, **caractérisé par** des moyens de transmission (15) capables de générer un signal radio lorsque ledit signal électrique est généré, dans lequel le circuit électrique comprend en outre des moyens de réception (17) pour recevoir ledit signal radio, de sorte que lesdits moyens d'entraînement mécaniques (12), ledit transducteur (13) et lesdits moyens de transmission (15) sont disposés dans un boîtier (21) pourvu d'une ouverture (39) au travers de laquelle des moyens d'actionnement (41) sont en mesure d'être insérés de manière à entraîner lesdits moyens d'entraînement mécaniques (12), et en ce que lesdits moyens d'entraînement mécaniques (12) comprennent un levier (26) pourvu d'éléments élastiques (27) qui tendent à le maintenir dans une position inactive déterminée, dans laquelle ledit levier (26) est configuré, sous l'action desdits moyens d'actionnement (41), pour mettre en rotation et déplacer une lame (32) dudit transducteur (13) et un élément ferromagnétique (33) directement relié à celle-ci, située à l'intérieur d'une bobine (35), de façon à générer à l'intérieur de la bobine (35) un courant induit qui alimente lesdits moyens de transmission (15), provoquant ainsi l'émission d'impulsions radio codées, qui sont reçues par les moyens de réception (17) afin de réaliser l'ouverture ou la fermeture dudit circuit électrique (11).

2. Dispositif de commande selon la revendication 1, **caractérisé en ce que** ledit boîtier (21) comprend une boîte (22) apte à être fixée sur un mur et à supporter à la fois ledit transducteur (13), lesdits moyens de transmission (15) et également lesdits moyens d'entraînement mécaniques (12).

3. Dispositif de commande selon l'une quelconque des revendications précédentes, **caractérisé en ce que** lesdits moyens d'actionnement comprennent une carte suffisamment rigide (41).

4. Dispositif de commande selon l'une quelconque des revendications précédentes, **caractérisé en ce que** lesdits moyens de transmission comprennent un émetteur de signaux (15) apte à transformer ledit signal électrique généré par le transducteur (13) en un signal radio et pour transmettre ledit signal radio audit moyen de réception (17).
